# EUROPEAN PATENT SPECIFICATION

(11) **EP 3 011 814 B1**
(45) Date of publication and mention of the grant of the patent: **03.04.2019**
(21) Application number: 15187616.6
(22) Date of filing: 30.09.2015
(51) Int. Cl.: A01B 59/06, B60D 1/62, A01B 59/00, A01B 59/042, B60D 1/04, B60D 1/36, B60D 1/64

(54) **COUPLING ASSEMBLY FOR COUPLING A TOWED IMPLEMENT TO A PRIME MOVER**
KUPPLUNGSANORDNUNG ZUM ANKOPPELN EINES ANGEHÄNGTEN ARBEITSGERÄTS AN EINE ZUGMASCHINE
ENSEMBLE DE COUPLAGE POUR COUPLER UN OUTIL TRACTÉ À UN MOTEUR PRIMAIRE

(30) Priority: 22.10.2014 US 201414520820
(43) Date of publication of application: 27.04.2016
(73) Proprietor: Deere & Company, Moline, IL 61265 (US)
(72) Inventor: Huegerich, Tony J, Cedar Falls, IA Iowa 50613 (US)
(74) Representative: Dehnhardt, Florian Christopher

(56) References cited:
- EP-A1- 1 365 074
- US-A- 5 507 530

## Description

The present invention relates to a coupling assembly for connecting a towed implement to a prime mover. The coupling assembly comprises a manifold which can be mounted to the prime mover and a coupler frame which can be mounted to the implement. A pivot pin projects laterally from a side of the manifold. A lever member is pivotally mounted on the pivot pin. The lever member has a hub which rotatably receives the pivot pin. A first arm projects away from the hub. A second arm projects away from the hub. A latch pin projects laterally away from the first arm. A latch member is fixed to the coupler frame. The latch member has a body. A latch finger is spaced apart from the body. A spacer connects the latch finger to the body. The body, the latch finger and the spacer form a slot therebetween. The body forms a slot wall which is spaced apart from the latch finger and which faces the latch finger. The body also forms a latch wall which is joined to the slot wall.

Tractors and utility vehicles used for agricultural work may be coupled to towed implements which have hydraulic couplers which must be connected to complementary hydraulic couplers of the tractor or utility vehicle. Implements are not utilized full time with the tractor, so it is desirable that a coupling assembly allows quick, easy removal and reinstallation of the implement. Flat face hydraulic quick couplers need to be mechanically locked together because of the hydraulic separating forces. Others have used an external locking lever which must be operated manually.

Such coupling assembly is known from US 5 507 530 A, showing a coupler connection mechanism for use with a quick attach front end loader on a wheeled tractor. The coupler connection mechanism includes a male fluid coupler mounted to a male fluid coupler holder and a female fluid coupler mounted to a retainer. A pair of lever arms is pivotally attached to the retainer by coaxial pins. Pins on the lever arms enter slots in wings on the male fluid holder. Clockwise movement of the lever arms moves the pins against upper surfaces of the slots and moves the female fluid couplers into mating connection toward the male fluid couplers. The connection has to be done manually by actuating a handle which is connected to the outer ends of the lever arms.

An improved coupling assembly is needed for an implement that can be quickly and easily connected and disconnected from a tractor. Furthermore, a mechanically lock coupling is needed that can reduce the difficulty of securing hydraulic couplers of the tractor to hydraulic couplers on the implement.

These and other objects are achieved by the present invention, wherein a coupling assembly for coupling a towed implement to a prime mover is provided. The coupling assembly comprises a manifold which can be mounted to the prime mover, and a coupler frame which can be mounted to the implement. A pivot pin projects laterally from a side of the manifold . A lever member is pivotally mounted on the pivot pin . The lever member has a hub which rotatably receives the pivot pin, a first arm projecting away from the hub, a second arm projecting away from the hub, a latch pin projecting laterally away from the first arm, and a locking recess formed by the second arm. A lock pin projects laterally and is supported by the coupler frame. A latch member is fixed to the coupler frame . The latch member has a body, a latch finger spaced apart from the body, and a spacer connecting the latch finger to the body. The body, the latch finger and the spacer form a slot therebetween. The body forms a slot wall which is spaced apart from the latch finger and which faces the latch finger. The body also forms a latch wall which is joined to the slot wall. The latch wall engages the latch pin, pivots the er member and moves the latch pin into the slot as the coupler frame moves towards the manifold. The second arm moves to a locking position wherein the locking recess receives the lock pin as the lever member is pivoted by the latch member.

For a complete understanding of the objects, techniques, and structure of the invention reference should be made to the following detailed description and accompanying drawings:
- Fig. 1: is a side view of a coupling assembly embodying the invention,
- Fig. 2: is a perspective view of the coupling assembly of Fig. 1,
- Fig. 3: is a perspective view of an implement coupler portion of the coupling assembly of Fig. 1,
- Fig. 4: is a sectional view of the coupling assembly of Fig. 2,
- Fig. 5: is a side view of the coupling assembly Fig. 1 in an initial coupling condition,
- Fig. 6: is a side view of the coupling assembly of Fig. 1 in a fully coupled condition, and
- Fig. 7: is a perspective view of the coupling assembly of Fig. 1 mounted on a pickup hitch.

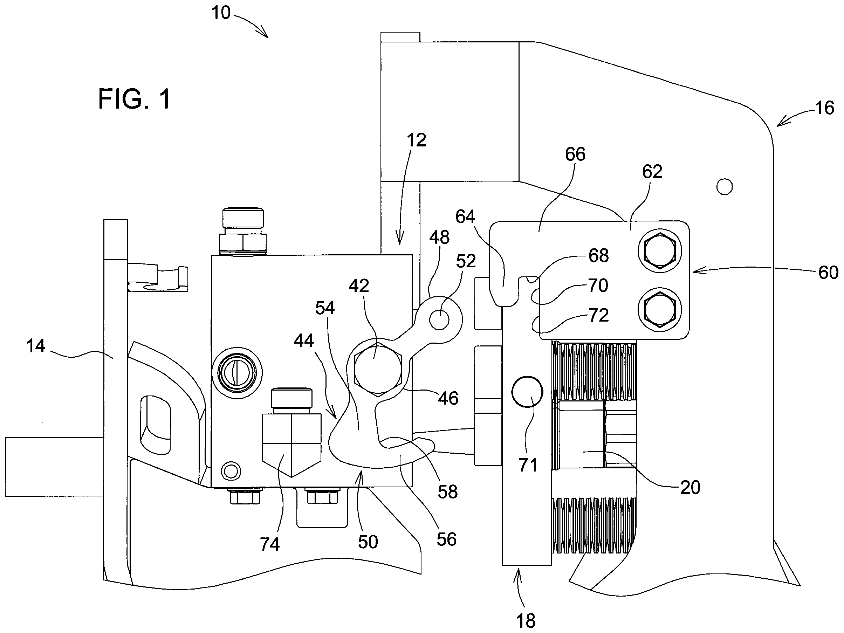

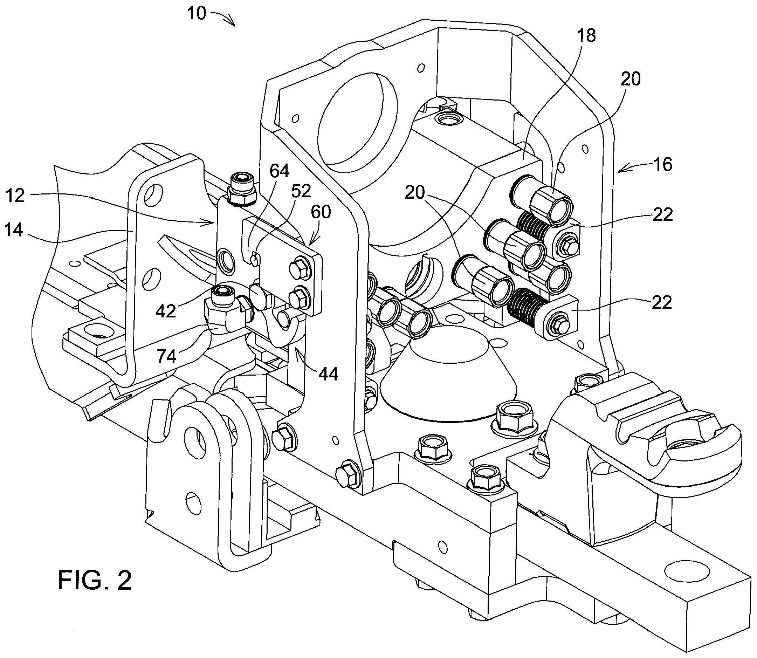

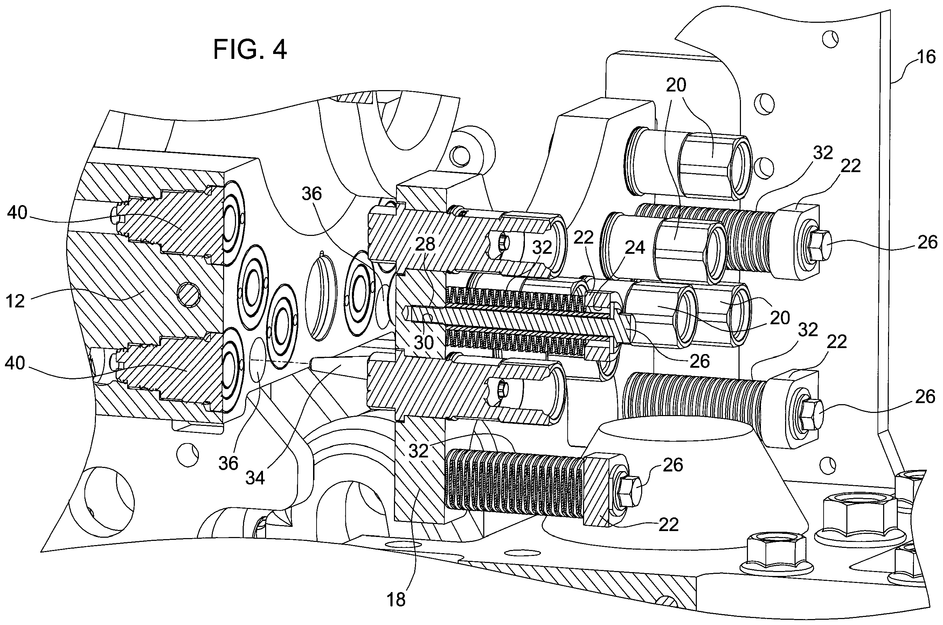

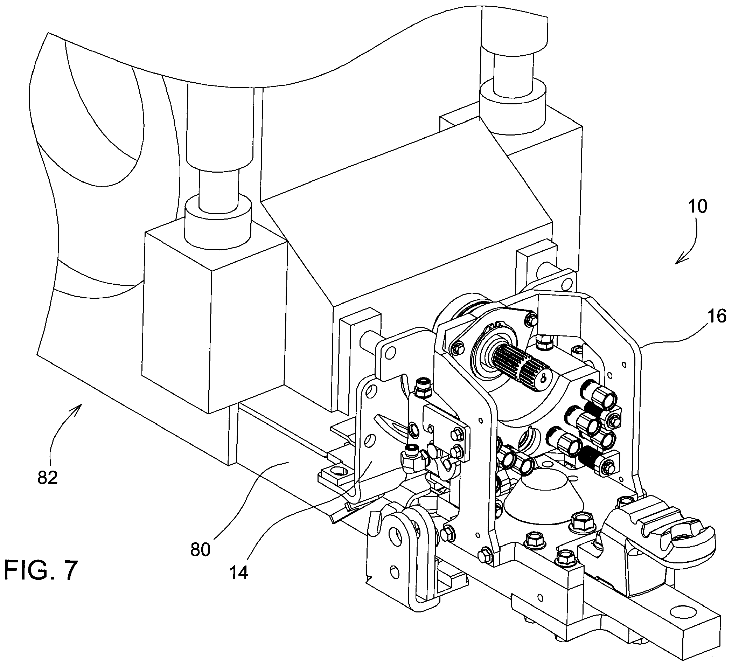

Referring to Figs. 1 to 3, a coupling assembly 10 is provided for coupling a prime mover, such as a tractor, to an implement towed by the prime mover. A housing member or manifold 12 is mounted to a structure 14 of the tractor. A implement member or coupler frame 16 is mounted to the implement. An implement plate or couple plate 18 is movably supported by the coupler frame 16. One or more hydraulic and/or electric implement couplers 20 are installed in the coupler plate 18. As best seen in Figs. 2 and 4, support brackets 22 project inwardly from the coupler frame 16. Each support bracket 22 has a bore 24 which receives a support bolt 26. Each support bolt 26 has a threaded end 28 which is threadably received by a corresponding threaded bore 30 in the coupler plate 18. A resilient spring member 32 is mounted around each support bolt 26, and is biased to urge the coupler plate 18 towards the manifold 12. Alignment dowels 34 project from the coupler plate 18 towards the manifold 12 and are received by alignment bores 36 formed in the manifold 12. The manifold 12 supports hydraulic and/or electric tractor couplers 40 which are matingly engagable with the implement couplers 20. The coupler frame 16 may be pulled towards the manifold 12 by a conventional pick up hitch (Fig. 7).

As best seen in Fig. 1, a pivot pin 42 projects laterally from a side of the manifold 12. A lever member 44 is pivotally mounted on the pivot pin 42. The lever member 42 has a hub 46 which rotatably receives the pivot pin 42, a first arm 48 projecting away from the hub 46, and a second arm 50 projecting away from the hub 46. The lever member 44 also has a latch pin 52 which projects laterally away from an outer end of the first arm 48. The second arm 50 includes a first leg 54 which is joined to the hub 46 and a second leg 56 which extends away from the first leg 54. The first and second legs 54 and 56 are angled with respect to each other to form a locking recess 58.

Also as best seen in Fig. 1, a latch member 60 is fixed, such as by bolts, to the coupler frame 16. The latch member 60 has a body 62, a latch finger 64 spaced apart from the body 62, and a spacer 66 which connects the latch finger 64 to the body 62. The body 62, the latch finger 64 and the spacer 66 form a slot 68 therebetween. The body 62 forms a slot wall 70 which is spaced apart from the finger 64 and which faces the finger 64. The body 62 also forms a latch wall 72 which is joined to the slot wall 70. A lock pin 71 projecting laterally from the coupler plate 18.

As best seen in Figs. 1 and 2, a stop member 74 is formed by a hydraulic fitting which is attached to the manifold 12 spaced apart from the pivot pin 42. The lever member 44 has an uncoupled position wherein gravity moves the first arm 48 towards the latch member 60 and moves the second arm 50 into engagement with the stop member 74.

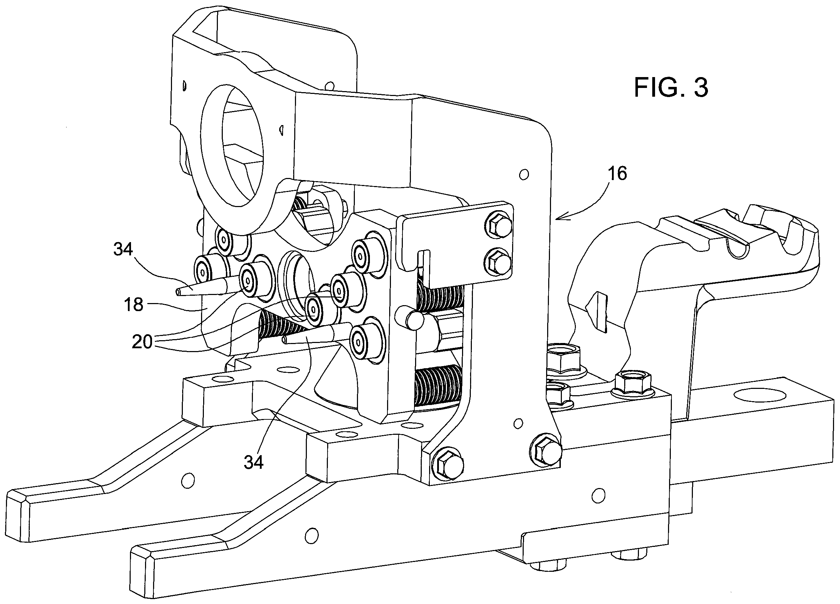

As best seen in Figs. 3 and 4, a pair of alignment dowels 34 projects from the coupler plate 18. The manifold 12 includes a pair of alignment bores 36 which receive the alignment dowels 34.

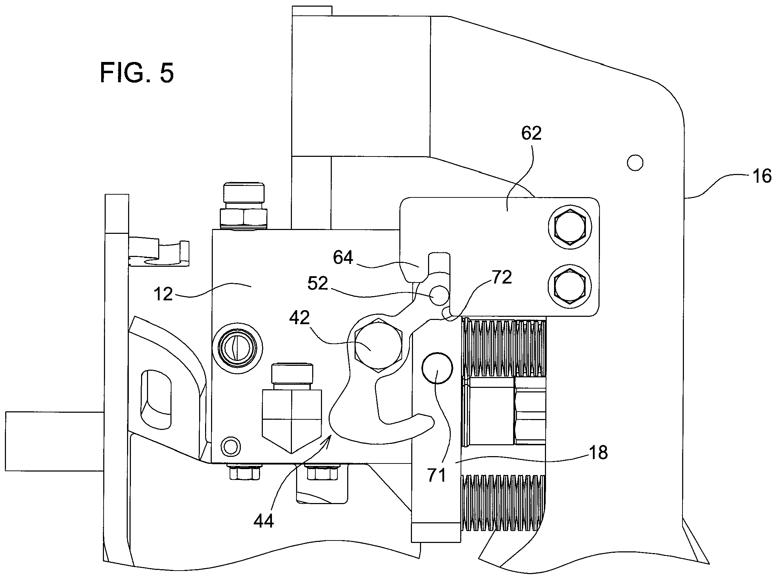

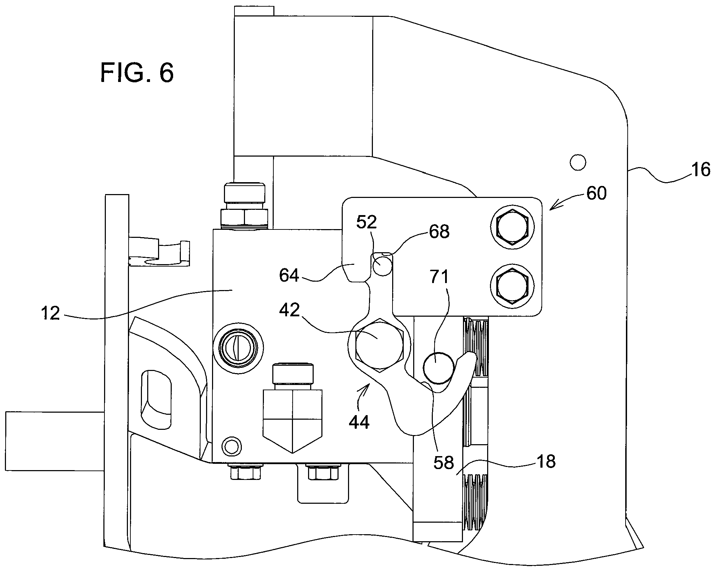

As best seen in Figs. 5 and 6, the latch wall 72 engages the latch pin 52 and pivots the lever member 44 and moves the latch pin 52 into the slot 68 as the coupler frame 16 moves towards the manifold 12. Also, the second arm 50 moves to a locking position wherein the locking recess 58 receives the lock pin 71 as the lever member 44 is pivoted by the latch member 60.

Referring to Fig. 7, a tractor pick up hitch 80 is mounted at the rear of a tractor frame part 82. The pickup hitch 80 supports the coupling assembly 10 which includes the structure 14 and the coupler frame 16.

The result is a coupling assembly 10 which can automatically connect and lock flat face hydraulic quick couplers together using a conventional pickup hitch 80 without leaving the tractor cab. The hydraulic cylinder of the pickup hitch 80 brings the hydraulic flat face quick couplers together so that the coupling assembly 10 automatically mechanically locks the tractor couplers 40 and the implement couplers 20 together. A couple plate 18 supports the implement couplers 20 facing a manifold 12 which is attached to a structure 14 of the pickup hitch 80. Resilient spring members 32 movably hold the couple plate 18 to a coupler frame 16 which is fixed to the implement. As the hydraulic cylinder of the pickup hitch 80 pulls the coupler frame 16 to the tractor, the couple plate 18 contacts the manifold 12. The hydraulic cylinder continues to pull the coupler frame 16 towards the tractor, compressing the resilient spring members 32 and preventing damage to the couplers 20 and 40. The additional coupler frame movement actuates the latching and locking mechanism. The resilient spring members 32 also allow for some coupler frame movement without the coupler frame 16 losing contact so the mechanical lock can be released prior to pulling the couplers 20 and 40 apart.

## Claims

1. A coupling assembly for coupling a towed implement to a prime mover, the coupling assembly (10) comprising a manifold (12) which can be mounted to the prime mover; a coupler frame (16) which can be mounted to the implement; a pivot pin (42) projecting laterally from a side of the manifold (12); a lever member (44) pivotally mounted on the pivot pin (42), the lever member (44) having a hub (46) which rotatably receives the pivot pin (42), a first arm (48) projecting away from the hub (46), a second arm (50) projecting away from the hub (46), a latch pin (52) projecting laterally away from the first arm (48); and a latch member (60) fixed to the coupler frame (16), the latch member (60) having a body (62), a latch finger (64) spaced apart from the body (62), and a spacer (66) connecting the latch finger (64) to the body (62), the body (62), the latch finger (64) and the spacer (66) forming a slot (68) therebetween, the body (62) forming a slot wall (70) which is spaced apart from the latch finger (64) and which faces the latch finger (64), the body (62) also forming a latch wall (72) which is joined to the slot wall (70), **characterized by** a locking recess (58) formed by the second arm (50) and a lock pin (71) which projects laterally and is supported by the coupler frame (16), the latch wall (72) engaging the latch pin (52), pivoting the lever member (44) and moving the latch pin (52) into the slot (68) as the coupler frame (16) moves towards the manifold (12), and the second arm (50) moving to a locking position wherein the locking recess (58) receives the lock pin (71) as the lever member (44) is pivoted by the latch member (60).

2. The coupling assembly according to claim 1, **characterized in that** gravity moves the first arm (48) towards the latch member (60) and into an uncoupled position when the latch member (60) is spaced apart from the lever member (44).

3. The coupling assembly according to claim 1 or 2, **characterized in that** a stop member (74) is mounted to the manifold (12), and the lever member (44) having an uncoupled position wherein gravity moves the first arm (48) towards the latch member (60) and moves the second arm (50) into engagement with the stop member (74).

4. The coupling assembly according to one of claims 1 to 3, **characterized in that** a first hydraulic and/or electric coupler (20) is mounted to the coupler frame (16) and a second hydraulic and/or electric coupler (40) is mounted to the manifold (12), the first hydraulic and/or electric coupler (20) being coupled to the second hydraulic and/or electric coupler (40) as the coupler frame (16) moves towards the manifold (12).

5. The coupling assembly according to one of claims 1 to 4, **characterized in that** a first hydraulic and/or electric coupler (20) is mounted to a coupler plate (18) movably mounted to the coupler frame (16), and a second hydraulic and/or electric coupler (40) is mounted to the manifold (12), the first hydraulic and/or electric coupler (20) being coupled to the second hydraulic and/or electric coupler (40) as the coupler plate (18) moves towards the manifold (12), and a resilient spring member (32) is coupled between the coupler frame (16) and the coupler plate (18), the resilient spring member (32) being biased to urge the coupler plate (18) towards the manifold (12).

6. The coupling assembly according to claim 5, **characterized in that** the lock pin (71) projects laterally from the coupler plate (18).

7. The coupling assembly according to one of claims 1 to 6, **characterized in that** an alignment dowel (34) projects from the manifold (12) or coupler frame (16), and the coupler frame (16) or manifold (12) includes an alignment bore (36) which receives the alignment dowel (34).

## Patentansprüche

1. Kupplungsanordnung zum Ankoppeln eines angehängten Arbeitsgeräts an eine Zugmaschine, wobei die Kupplungsanordnung (10) einen Krümmer (12) umfasst, der an der Zugmaschine angebracht werden kann; einen Koppelrahmen (16), der an dem Arbeitsgerät angebracht werden kann; einen Lagerbolzen (42), der sich lateral von einer Seite des Krümmers (12) erstreckt; ein Hebelelement (44), das schwenkbar an dem Lagerbolzen (42) angebracht ist, wobei das Hebelelement (44) eine Nabe (46) aufweist, die den Lagerbolzen (42) drehbar aufnimmt, wobei sich ein erster Arm (48) von der Nabe (46) weg erstreckt, wobei sich ein zweiter Arm (50) von der Nabe (46) weg erstreckt, wobei sich ein Verriegelungsstift (52) lateral von dem ersten Arm (48) weg erstreckt; und ein Verriegelungselement (60), das an dem Koppelrahmen (16) befestigt ist, wobei das Verriegelungselement (60) einen Körper (62), einen Verriegelungsfinger (64), der von dem Körper (62) beabstandet ist, und einen Abstandhalter (66), der den Verriegelungsfinger (64) mit dem Körper (62) verbindet, aufweist, wobei der Körper (62), der Verriegelungsfinger (64) und der Abstandhalter (66) einen Schlitz (68) dazwischen bilden, wobei der Körper (62) eine Schlitzwand (70) bildet, die von dem Verriegelungsfinger (64) beabstandet ist und die dem Verriegelungsfinger (64) gegenüberliegt, wobei der Körper (62) außerdem eine Verriegelungswand (72) bildet, die mit der Schlitzwand (70) verbunden ist, charakterisiert durch eine Verschlussaussparung (58), die durch den zweiten Arm (50) und einen Sperrstift (71), der sich lateral erstreckt und von dem Koppelrahmen (16) gestützt wird, gebildet wird, wobei die Verriegelungswand (72) mit dem Verriegelungsstift (52) in Eingriff steht, wobei das Hebelelement (44) geschwenkt wird und der Verriegelungsstift (52) in den Schlitz (68) bewegt wird, wenn sich der Koppelrahmen (16) in Richtung des Krümmers (12) bewegt, und wobei sich der zweite Arm (50) in eine Verschlussposition bewegt, wobei die Verschlussaussparung (58) den Sperrstift (71) aufnimmt, wenn das Hebelelement (44) von dem Verriegelungselement (60) geschwenkt wird.

2. Kupplungsanordnung nach Anspruch 1, **dadurch gekennzeichnet, dass** die Schwerkraft den ersten Arm (48) in Richtung des Verriegelungselements (60) und in eine entkoppelte Position bewegt, wenn das Verriegelungselement (60) von dem Hebelelement (44) beabstandet ist.

3. Kupplungsanordnung nach Anspruch 1 oder 2, **dadurch gekennzeichnet, dass** ein Anschlagelement (74) an dem Krümmer (12) befestigt ist und das Hebelelement (44) eine entkoppelte Position aufweist, wobei die Schwerkraft den ersten Arm (48) in Richtung des Verriegelungselements (60) bewegt und den zweiten Arm (50) in Eingriff mit dem Anschlagelement (74) bewegt.

4. Kupplungsanordnung nach einem der Ansprüche 1 bis 3, **dadurch gekennzeichnet, dass** eine erste hydraulische und/oder elektrische Kupplung (20) an dem Koppelrahmen (16) angebracht ist und eine zweite hydraulische und/oder elektrische Kupplung (40) an dem Krümmer (12) angebracht ist, wobei die erste hydraulische und/oder elektrische Kupplung (20) an die zweite hydraulische und/oder elektrische Kupplung (40) gekoppelt wird, wenn sich der Koppelrahmen (16) in Richtung des Krümmers (12) bewegt.

5. Kupplungsanordnung nach einem der Ansprüche 1 bis 4, **dadurch gekennzeichnet, dass** eine erste hydraulische und/oder elektrische Kupplung (20) an einer Anschlussplatte (18) angebracht ist, die beweglich an dem Koppelrahmen (16) angebracht ist, und eine zweite hydraulische und/oder elektrische Kupplung (40) an dem Krümmer (12) angebracht ist, wobei die erste hydraulische und/oder elektrische Kupplung (20) an die zweite hydraulische und/oder elektrische Kupplung (40) gekoppelt wird, wenn sich die Anschlussplatte (18) in Richtung des Krümmers (12) bewegt, und dass ein elastisches Federelement (32) zwischen den Koppelrahmen (16) und die Anschlussplatte (18) gekoppelt wird, wobei das elastische Federelement (32) vorgespannt ist, um die Anschlussplatte (18) in Richtung des Krümmers (12) zu drücken.

6. Kupplungsanordnung nach Anspruch 5, **dadurch gekennzeichnet, dass** sich der Sperrstift (71) lateral von der Anschlussplatte (18) erstreckt.

7. Kupplungsanordnung nach einem der Ansprüche 1 bis 6, **dadurch gekennzeichnet, dass** sich ein Passstift (34) von dem Krümmer (12) oder Koppelrahmen (16) erstreckt und der Koppelrahmen (16) oder Krümmer (12) eine Ausrichtungsbohrung (36) aufweist, die den Passstift (34) aufnimmt.

## Revendications

1. Ensemble de couplage pour coupler un outil tracté à un élément moteur, l'ensemble de couplage (10) comprenant un collecteur (12) qui peut être monté sur l'élément moteur ; un cadre de coupleur (16) qui peut être monté sur l'outil ; un pivot (42) faisant saillie latéralement depuis un côté du collecteur (12) ; un élément levier (44) monté pivotant sur le pivot (42), l'élément levier (44) ayant un moyeu (46) qui reçoit en rotation le pivot (42), un premier bras (48) faisant saillie du moyeu (46), un second bras (50) faisant saillie du moyeu (46), une goupille de verrouillage (52) faisant saillie latéralement du premier bras (48) ; et un élément verrou (60) fixé au cadre de coupleur (16), l'élément verrou (60) ayant un corps (62), un doigt de verrouillage (64) espacé du corps (62), et une entretoise (66) reliant le doigt de verrouillage (64) au corps (62), le corps (62), le doigt de verrouillage (64) et l'entretoise (66) formant une fente (68) entre eux, le corps (62) formant une paroi de fente (70) qui est non couplée au doigt de verrouillage (64) et qui fait face au doigt de verrouillage (64), le corps (62) formant également une paroi de verrou (72) qui est reliée à la paroi de fente (70), **caractérisé par** un évidement de verrouillage (58) formé par le second bras (50) et une goupille de verrouillage (71) qui fait saillie latéralement et est supportée par le cadre de coupleur (16), la paroi de verrou (72) venant en prise avec la goupille de verrouillage (52), faisant pivoter l'élément levier (44) et déplaçant la goupille de verrouillage (52) dans la fente (68) lorsque le cadre de coupleur (16) se déplace vers le collecteur (12), et le second bras (50) se déplaçant vers une position de verrouillage dans laquelle l'évidement de verrouillage (58) reçoit la goupille de verrouillage (71) lorsque l'élément levier (44) est pivoté par l'élément verrou (60).

2. Ensemble de couplage selon la revendication 1, **caractérisé en ce que** la gravité déplace le premier bras (48) vers l'élément verrou (60) et dans une position non couplée lorsque l'élément verrou (60) est espacé de l'élément levier (44).

3. Ensemble de couplage selon la revendication 1 ou 2, **caractérisé en ce qu'**un élément butée (74) est monté sur le collecteur (12), et l'élément levier (44) a une position non couplée dans laquelle la gravité déplace le premier bras (48) vers l'élément verrou (60) et déplace le second bras (50) en prise avec l'élément butée (74).

4. Ensemble de couplage selon l'une des revendications 1 à 3, **caractérisé en ce qu'**un premier coupleur hydraulique et/ou électrique (20) est monté sur le cadre de coupleur (16) et un second coupleur hydraulique et/ou électrique (40) est monté sur le collecteur (12), le premier coupleur hydraulique et/ou électrique (20) étant couplé au second coupleur hydraulique et/ou électrique (40) lorsque le cadre de coupleur (16) se déplace vers le collecteur (12).

5. Ensemble de couplage selon l'une des revendications 1 à 4, **caractérisé en ce qu'**un premier coupleur hydraulique et/ou électrique (20) est monté sur une plaque de coupleur (18) montée mobile sur le cadre de coupleur (16), et un second coupleur hydraulique et/ou électrique (40) est monté sur le collecteur (12), le premier coupleur hydraulique et/ou électrique (20) étant couplé au second coupleur hydraulique et/ou électrique (40) lorsque la plaque de coupleur (18) se déplace vers le collecteur (12), et un élément ressort élastique (32) est couplé entre le cadre de coupleur (16) et la plaque de coupleur (18), l'élément ressort élastique (32) étant sollicité pour pousser la plaque de coupleur (18) vers le collecteur (12).

6. Ensemble de couplage selon la revendication 5, **caractérisé en ce que** la goupille de verrouillage (71) fait saillie latéralement de la plaque de coupleur (18).

7. Ensemble de couplage selon l'une des revendications 1 à 6, **caractérisé en ce qu'**une cheville d'alignement (34) fait saillie du collecteur (12) ou du cadre de coupleur (16), et le cadre de coupleur (16) ou le collecteur (12) comprend un alésage d'alignement (36) qui reçoit la cheville d'alignement (34).
